# EUROPEAN PATENT APPLICATION

(11) **EP 4 079 937 A2**
(43) Date of publication of application: **26.10.2022**
(21) Application number: 22157374.4
(22) Date of filing: 17.02.2022
(51) Int. Cl.: C25B 1/04, C25B 9/65, C25B 9/70, C25B 9/73, C25B 15/08

(54) **DEVICE FOR PRODUCING HYDROGEN BY WATER ELECTROLYSIS**

(30) Priority: 21.04.2021 CN 202120844581 U
(71) Applicant: Sungrow Power Supply Co., Ltd., Hefei, Anhui 230088 (CN)
(72) Inventor: ZHANG, Xinjian, Hefei, 230088 (CN)
(74) Representative: Zacco Norway AS

(57) **Abstract**

The present disclosure provides a device for producing hydrogen by water electrolysis, which comprises a protective shell and an electrolytic bath provided in the protective shell, and a power supply cable and a pipeline are provided on the electrolytic bath, and both the power supply cable and the pipeline are coupled to the outside of the protective shell. In the device for producing hydrogen by water electrolysis provided by the present application, a protective shell is provided outside the electrolytic bath to avoid the exposed design of the electrolytic bath, that is, the device for producing hydrogen by water electrolysis can thus be installed indoors or outdoors, thereby improving the versatility of the device for producing hydrogen by water electrolysis.

## Description

### FIELD

The present disclosure relates to the technical field of hydrogen preparation, in particular to a device for producing hydrogen by water electrolysis.

### BACKGROUND

The electrolytic bath in the traditional device for producing hydrogen by water electrolysis is an exposed structure, and this type of electrolytic bath has the characteristics of low cost.

For the exposed electrolytic bath structure, the electrolytic bath body is charged, and the charged parts such as the electrode plate and the end clamp plate are exposed, thus there is a safety risk when the electrolytic bath is in an explosive gas environment.

At the same time, since the electrolytic bath is an exposed structure, the device for producing hydrogen by water electrolysis is only suitable for indoor installation, and not suitable for outdoor installation, resulting in low versatility of the device for producing hydrogen by water electrolysis.

Therefore, how to improve the versatility of the device for producing hydrogen by water electrolysis is an urgent technical problem to be solved by a person having ordinary skill in the art.

### SUMMARY

The object of the present disclosure is to provide a device for producing hydrogen by water electrolysis, which improves the versatility of the device for producing hydrogen by water electrolysis.

In order to achieve the above object, the present disclosure provides a device for producing hydrogen by water electrolysis, which includes a protective shell and an electrolytic bath provided in the protective shell, and the electrolytic bath is connected with a power supply cable and a pipeline, and both the power supply cable and the pipeline are coupled to the outside of the protective shell.

Preferably, the outer wall of the electrolytic bath is provided with a thermal insulation layer.

Preferably, the thermal insulation layer is sleeved on the outside of the electrolytic bath.

Preferably, a junction box is provided on the protective shell, and a connection terminal of the power supply cable is coupled to a connection terminal in the junction box, and the number of the junction box is one or at least two.

Preferably, the junction box is located on the elevation surface of the protective shell or the top surface of the protective shell or the bottom surface of the protective shell;

The interface ends of the junction box and of the pipeline are located on the same wall surface or different wall surfaces of the protective shell.

Preferably, an electrolytic bath connection port coupled to the pipeline is provided on the protective shell.

Preferably, the electrolytic bath is a vertical electrolytic bath or a horizontal electrolytic bath.

Preferably, an access panel is provided on the protective shell, and a blocking unit capable of blocking the access panel is provided on the protective shell.

Preferably, the number of the electrolytic bath is one or more;

When there are multiple electrolytic baths, the multiple electrolytic baths are coupled in parallel or in series, or the power supply cables of each electrolytic bath are independently provided.

Preferably, the protective shell has a closed structure.

Preferably, a sampling structure for sampling gas inside the protective shell is provided on the protective shell.

Preferably, the protective shell is filled with inert gas, and the internal air pressure of the protective shell is greater than the external air pressure of the protective shell.

Preferably, the inside of the protective shell is connected with the outside of the protective shell.

Preferably, a ventilation device is provided on the protective cell.

Preferably, a hydrogen amount detection device and an alarm device coupled to the hydrogen amount detection device are provided inside the protective shell.

In the above-mentioned technical embodiments, the device for producing hydrogen by water electrolysis provided by the present disclosure includes a protective shell and an electrolytic bath provided in the protective shell, and the electrolytic bath is connected with a power supply cable and a pipeline, and both the power supply cable and the pipeline are coupled to the outside of the protective shell.

It can be seen from the above description that in the device for producing hydrogen by water electrolysis provided by the present application, a protective shell is provided outside the electrolytic bath to avoid the exposed design of the electrolytic bath, that is, the device for producing hydrogen by water electrolysis can thus be installed indoors or outdoors, thereby improving the versatility of the device for producing hydrogen by water electrolysis.

### BRIEF DESCRIPTION OF DRAWINGS

In order to more clearly illustrate the technical solutions in the embodiments of the present disclosure or the prior art, the following will briefly describe the drawings that need to be used in the description of the embodiments or the prior art. Apparently, the drawings in the following description are only embodiments of the present disclosure. For a person having ordinary skill in the art, without creative work, other drawings can be obtained based on the provided drawings.
Figure 1 is a schematic diagram of the structure of a first device for producing hydrogen by water electrolysis provided by an embodiment of the present disclosure;
Figure 2 is a schematic diagram of the structure of a second device for producing hydrogen by water electrolysis provided by an embodiment of the present disclosure;
Figure 3 is a schematic diagram of the structure of a third device for producing hydrogen by water electrolysis provided by an embodiment of the present disclosure;
Figure 4 is a schematic diagram of the structure of a fourth device for producing hydrogen by water electrolysis provided by an embodiment of the present disclosure;
Figure 5 is a schematic diagram of the structure of a fifth device for producing hydrogen by water electrolysis provided by an embodiment of the present disclosure;

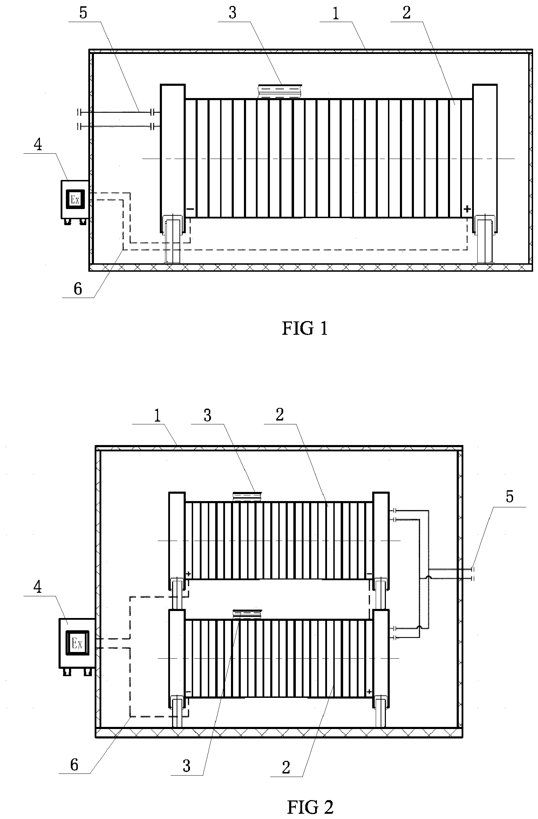

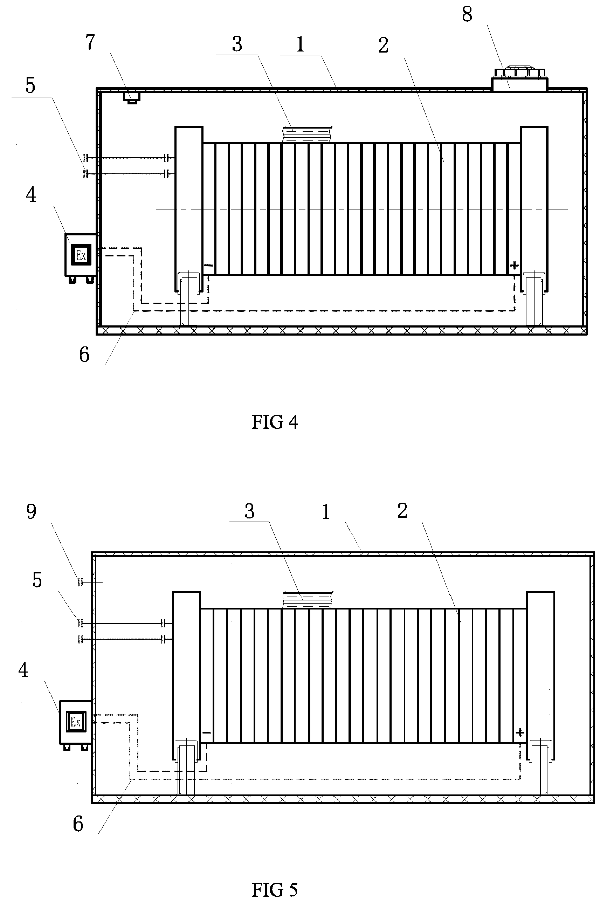

In Figures 1-5: 1-protective shell, 2-electrolytic bath, 3-thermal insulation layer, 4-junction box, 5-pipeline, 6-power supply cable, 7-hydrogen detection alarm, 8-a ventilation device, 9-sampling structure.

### DETAILED DESCRIPTION

The core of the present disclosure is to provide a device for producing hydrogen by water electrolysis, wherein the versatility of the device for producing hydrogen by water electrolysis is improved.

In order to enable a person having ordinary skill in the art to better understand the technical solution of the present disclosure, the present disclosure will be further illustrated in detail below with reference to the drawings and embodiments.

Please refer to Figure 1 to Figure 5.

In a specific embodiment, the device for producing hydrogen by water electrolysis provided by the present disclosure comprises a protective shell 1 and an electrolytic bath 2 provided in the protective shell 1. Specifically, the electrolytic bath 2 may be an electrolytic bath for producing hydrogen by alkaline water electrolysis or an electrolytic bath for producing hydrogen by proton exchange membrane water electrolysis. A power supply cable 6 and a pipeline 5 are provided on the electrolytic bath 2, wherein both the power supply cable 6 and the pipeline 5 are coupled to the outside of the protective shell 1. Specifically, the pipeline 5 is used to send out the electrolyte on the hydrogen side and the oxygen side in the electrolytic bath 2, and cool the electrolyte after supplementing with pure water and send back the electrolyte to the electrolytic bath 2. Of course, the number of the pipeline 5 may be more than one.

Wherein, the number of the electrolytic bath 2 provided in the protective shell 1 may be one or more. When the number of the electrolytic bath 2 is more than one, the number may be 2, 3, 4, etc.

When the number of the electrolytic bath 2 is more than one, multiple electrolytic baths 2 may be coupled in parallel. As shown in Figure 2, multiple electrolytic baths 2 are coupled in series.

The power supply cable 6 of each electrolytic bath 2 may also be provided independently. That is, there is no wiring between the two electrolytic baths 2. In this instance, the electrolytic baths 2 and the junction boxes 4 are in one-to-one correspondence.

In a specific embodiment, the protective shell 1 may be a closed structure. In order to know the hydrogen content in the protective shell 1 in time, preferably, a sampling structure 9 for sampling gas inside the protective shell 1 is provided on the protective shell 1. The hydrogen content in the gas in the protective shell 1 can be detected in real time through the sampling structure 9.

Preferably, the protective shell 1 is filled with inert gas, and the internal air pressure of the protective shell 1 is greater than the external air pressure of the protective shell 1. Specifically, a filling port for filling an inert gas into the inside of the protective shell 1 is provided on the protective shell 1. Specifically, the inert gas may be nitrogen gas. Since the inside of the protective shell 1 is in a positive pressure state, the gas from the external environment is prevented from entering the protective shell 1.

Specifically, the outer shape of the protective shell 1 may be square, cylindrical, or other structural forms, which are determined according to actual needs in the present application.

Preferably, an access panel is provided on the protective shell 1 to facilitate the inspection and repair of the electrolytic bath 2 or internal components. Specifically, the access panel may be blocked by a blocking unit. Preferably, a seal ring is provided at the junction of the blocking unit and the protective shell 1. When maintenance is required, the blocking unit is opened, and when the device for producing hydrogen by water electrolysis is working, the access panel is blocked by the blocking unit.

It can be seen from the above description that in the device for producing hydrogen by water electrolysis provided in the present application, the protective shell 1 is provided on the outside of the electrolytic bath 2, thereby avoiding the exposed design of the electrolytic bath 2. That is, in such a situation, the device for producing hydrogen by water electrolysis can be installed indoors or outdoors, thereby improving the versatility of the device for producing hydrogen by water electrolysis.

In the present application, a protective enclosure 1 is provided outside the electrolytic bath 2 to down-grade the level of the explosion hazardous zone in the area where the electrolytic bath 2 is located.

In a specific embodiment, the outer wall of the electrolytic bath 2 is provided with a thermal insulation layer 3. Specifically, the thermal insulation layer 3 may be wrapped around the outside of the electrolytic bath 2, or the thermal insulation layer 3 may be a thermal insulation material filled in the space inside the protective shell 1 and outside the electrolytic bath 2. The insulation layer 3 is a glass wool insulation layer, an aluminum silicate wool insulation layer or an expanded perlite insulation layer. For example, expanded perlite is used as the thermal insulation material, which is a material similar to sand and may be filled into all the unoccupied space in the protective shell 1 to thereby play a role of heat preservation. Since the electrolytic bath 2 has a heat preservation function, the influence of changes in the external environment temperature on the control of the heat dissipation of the electrolyte in the electrolytic bath 2 is reduced.

Specifically, the thickness of the thermal insulation layer 3 is determined according to the actual material and thermal insulation effect, which is not specifically limited in the present application.

A junction box 4 is provided on the protective shell 1, and a connection terminal of the power supply cable 6 is coupled with a connection terminal in the junction box 4. Specifically, the number of the junction box 4 is one or at least two. When there are multiple junction boxes 4, the position of the junction box 4 is determined according to the position of the power supply cable 6. In the present application, the junction box 4 is provided to facilitate the connection of the power supply cable 6. Preferably, the junction box 4 is a junction box with an explosion-proof function.

As shown in Figures 1 to 5, the junction box 4 is located on the elevation surface of the protective shell 1. Of course, the junction box 4 may be located on the top surface of the protective shell 1 or the bottom surface of the protective shell 1. When there are multiple junction boxes 4, the multiple junction boxes 4 may be located on the same wall surface or different wall surfaces of the protective shell 1.

As shown in Figure 1, Figure 4 and Figure 5, the interface ends of the junction box 4 and the pipeline 5 are located on the same wall surface of the protective shell 1.

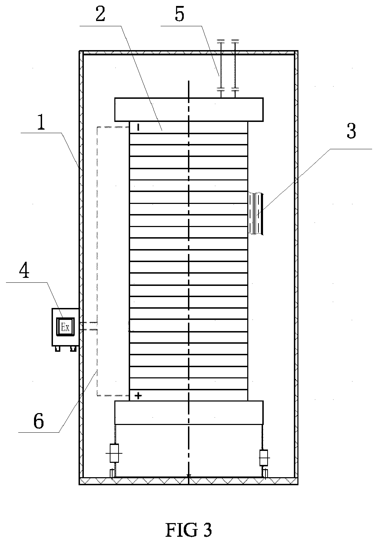

As shown in Figure 2 and Figure 3, the interface ends of the junction box 4 and of the pipeline 5 are located on different walls of the protective shell 1. Specifically, the interface ends of the junction box 4 and of the pipeline 5 are located on the adjacent wall surfaces of the protective shell 1 or two wall surfaces provided opposite to each other, and the specific installation position thereof is determined according to actual needs.

Specifically, one of the connection terminals of the power supply cable 6 and the connection terminal in the connection box 4 is a copper busbar, or both are copper busbars.

In order to facilitate the connection of the pipeline 5, preferably, an electrolytic bath connection port coupled to the pipeline 5 is provided on the protective shell 1. Specifically, a quick connector may be provided on the electrolytic bath connection port. The interface provided on the protective shell 1 is coupled with the interface of the electrolytic bath by the connection port of the electrolytic bath, so that the electrolyte is circulated in the electrolytic bath 2 and the hydrogen gas and oxygen gas generated in the electrolytic bath 2 are taken out.

Specifically, as shown in Figure 1, Figure 2, Figure 4, and Figure 5, the electrolytic bath 2 is a horizontal electrolytic bath. As shown in Figure 3, the electrolytic bath 2 is a vertical electrolytic bath, which further reduces the area occupied by the electrolytic bath 2.

In order to further improve the use safety of the device for producing hydrogen by water electrolysis, preferably, the protective housing 1 is an explosion-proof box.

The protective shell 1 is provided as an explosion-proof box, so that the electrolytic bath 2 has an explosion-proof function and may be placed together with a non-explosion-proof hydrogen production power source, thereby saving the length of the cable from the hydrogen production power source to the electrolytic bath 2, reducing the line loss, and thereby reducing the system energy consumption.

In another embodiment, the inside of the protective shell 1 is connected with the outside of the protective shell 1. Specifically, a ventilation device 8 is provided on the protective shell 1. Specifically, a waterproof and breathable membrane is provided on the ventilation device 8, or the ventilation device 8 is provided with a fan.

Furthermore, a hydrogen amount detection device and an alarm device coupled to the hydrogen amount detection device are provided inside the protective shell 1.Specifically, a hydrogen detection alarm 7 is provided on the protective shell 1. Specifically, it gives an alarm when the hydrogen content in the air in the protective shell 1 exceeds 1% (volume fraction).

The electrolytic bath 2 in the device for producing hydrogen by water electrolysis provided by the present application has an explosion-proof function. When the electrolytic bath 2 is placed in an explosive gas environment, there is no safety risk. In addition, it also solves the key problem that the electrolytic bath 2 cannot be separately certified for explosion-proof. After the electrolytic bath 2 can be certified, the possibility that the electrolytic bath 2 can be sold as a separate commodity is increased, and the use range of the electrolytic bath 2 is increased.

The various embodiments in this specification are described in a progressive manner, and each embodiment focuses on the differences between other embodiments, and the same odijinr similar parts between the various embodiments can be referred to each other.

The above description of the disclosed embodiments enables a person having ordinary skill in the art to realize or use the present disclosure. Various modifications to these embodiments will be obvious to a person having ordinary skill in the art. The general principles defined herein can be implemented in other embodiments without departing from the spirit or scope of the present disclosure. Therefore, the present disclosure will not be limited to the embodiments shown in the present disclosure, but should conform to the widest scope consistent with the principles and novel features disclosed in the present application.

## Claims

1. A device for producing hydrogen by water electrolysis, **characterized in that** it comprises a protective shell (1) and an electrolytic bath (2) provided in the protective shell (1), wherein the electrolytic bath (2) is connected with a power supply cable (6) and a pipeline (5), and both the power supply cable (6) and the pipeline (5) are coupled to outside of the protective shell (1).

2. The device for producing hydrogen by water electrolysis according to claim 1, wherein an outer wall of the electrolytic bath (2) is provided with a thermal insulation layer (3).

3. The device for producing hydrogen by water electrolysis according to claim 2, wherein the thermal insulation layer (3) is sleeved on an outside of the electrolytic bath (2).

4. The device for producing hydrogen by water electrolysis according to claim 1, wherein a junction box (4) is provided on the protective shell (1), and a connection terminal of the power supply cable (6) is coupled to a connection terminal in the junction box (4), and the number of the junction box (4) is one or at least two.

5. The device for producing hydrogen by water electrolysis according to claim 4, wherein the junction box (4) is located on the elevation surface of the protective shell (1) or the top surface of the protective shell (1) or the bottom surface of the protective shell (1);
the junction box (4) and an interface end of the pipeline (5) are located on the same wall surface or different wall surfaces of the protective shell (1).

6. The device for producing hydrogen by water electrolysis according to claim 1, wherein an electrolytic bath connection port coupled to the pipeline (5) is provided on the protective shell (1).

7. The device for producing hydrogen by water electrolysis according to claim 1, wherein the electrolytic bath (2) is a vertical electrolytic bath or a horizontal electrolytic bath.

8. The device for producing hydrogen by water electrolysis according to claim 1, wherein an access panel is provided on the protective shell (1), and a blocking unit capable of blocking the access panel is provided on the protective shell (1).

9. The device for producing hydrogen by water electrolysis according to claim 1, wherein the number of the electrolytic bath (2) is one or more;
when there are multiple electrolytic baths (2), the multiple electrolytic baths (2) are coupled in parallel or in series, or the power supply cables (6) of each electrolytic bath (2) are independently provided.

10. The device for producing hydrogen by water electrolysis according to any one of claims 1 to 9, wherein the protective shell (1) has a closed structure.

11. The device for producing hydrogen by water electrolysis according to claim 10, wherein a sampling structure (9) for sampling gas inside the protective shell (1) is provided on the protective shell (1).

12. The device for producing hydrogen by water electrolysis according to claim 10, wherein the protective shell (1) is filled with inert gas, and the internal air pressure of the protective shell (1) is greater than the external air pressure of the protective shell (1).

13. The device for producing hydrogen by water electrolysis according to any one of claims 1 to 9, wherein the inside of the protective shell (1) is connected with the outside of the protective shell (1).

14. The device for producing hydrogen by water electrolysis according to claim 13, wherein a ventilation device (8) is provided on the protective cell (1).

15. The device for producing hydrogen by water electrolysis according to claim 13, wherein a hydrogen amount detection device and an alarm device coupled to the hydrogen amount detection device are provided inside the protective shell (1).
